# EUROPÄISCHE PATENTSCHRIFT

(11) **EP 3 219 999 B1**
(45) Veröffentlichungstag und Bekanntmachung des Hinweises auf die Patenterteilung: **06.01.2021**
(21) Anmeldenummer: 17160974.6
(22) Anmeldetag: 15.03.2017
(51) Int. Cl.: F16D 69/02, F16D 69/04, B05D 1/04

(54) **VERFAHREN ZUM HERSTELLEN EINER REIBSCHICHT**
METHOD FOR MANUFACTURING A FRICTION COATING
PROCÉDÉ DE FABRICATION D'UNE COUCHE DE FRICTION

(30) Priorität: 16.03.2016 DE 102016204349
(43) Veröffentlichungstag der Anmeldung: 20.09.2017
(73) Patentinhaber: INNO FRICTION GmbH, 57577 Hamm (Sieg) (DE)
(72) Erfinder: Meißner, Daniel, 53783 Eitorf (DE)
(74) Vertreter: Rebbereh, Cornelia

(56) Entgegenhaltungen:
- EP-A1- 0 557 657
- EP-A1- 1 074 758

## Beschreibung

Die Erfindung betrifft ein Verfahren zum Herstellen einer Reibschicht, insbesondere für einen trocken oder feucht laufenden Kupplungsreibbelag, auf einem Trägerelement, mit den Merkmalen gemäß dem Oberbegriff des Anspruchs 1.

Die EP 1 074 758 B1 offenbart ein Verfahren zu Herstellung von Reibkörpern, wobei ein Auftragen der Reibbelagmischung auf den Stahlgrundkörper durch PulverSprühen vorgesehen ist. Die EP 0 557 657 A1 offenbart die Herstellung eines Reibkörpers, wobei auf einen Metallgrundkörper ein pulverförmiges Klebemittel aufgebracht wird und anschließend erhitzt wird, sodass der Kleber fließt aber sich nicht vernetzt. Anschließend wird ein Reibmaterial aufgebracht und mittels Heißverpressung die Vernetzung des Klebers herbeigeführt.

Aus der deutschen Offenlegungsschrift DE 10 2012 014 811 A1 ist ein Reibteil für eine reibschlüssig arbeitende Einrichtung mit einer ringförmigen Reibfläche bekannt, die einen Innenrand und einen Außenrand aufweist. Aus der deutschen Offenlegungsschrift DE 10 2009 013 406 A1 ist ein Verfahren zur Herstellung eines Reibbelags bekannt, der einer Heißpresse entnommen und im noch heißen Zustand in eine Kühlpresse eingeführt wird. Aus der deutschen Offenlegungsschrift DE 10 2011 086 521 A1 sind ein Reibkörper, insbesondere eine Nasslauf-Reiblamelle, und ein Verfahren zur Herstellung des Reibkörpers, insbesondere der Nasslauf-Reiblamelle, bekannt, wobei der Reibkörper einen Belagträger aufweist, der wiederum einen Reibbereich und einen Verbindungsbereich aufweist, wobei der Reibkörper mindestens zwei Papierrohlinge aufweist. Aus der deutschen Patentschrift DE 10 2005 029 036 B4 ist ein Verfahren zur Herstellung eines Bremsbelags bekannt, wobei eine Reibmasse auf einer Trägerplatte gepresst, anschließend die Reibmasse auf ihrer Reibseite durch Fräsen bearbeitet wird, wobei nach dem Fräsen und vor einem Härten ein Lack, vorzugsweise ein Pulverlack, auf die Trägerseite des Bremsbelages aufgebracht wird, wobei der Lack beim Härten des Bremsbelages ausgehärtet wird. Aus der deutschen Offenlegungsschrift DE 10 2014 113 434 A1 ist ein Bauelement mit Brandschutzeigenschaften mit einem Grundkörper bekannt, der eine Beschichtung aufweist, wobei die Beschichtung einen Pulverlack enthält. Aus der deutschen Gebrauchsmusterschrift DE 20 2013 004 788 U1 sind geräuschdämpfende Maßnahmen auf Bremsbelägen bekannt, die in Kraftfahrzeugen und Anhängern jeglicher Art eingesetzt werden, auf Basis von beschichteten Blechen aus geeigneten Trägermaterialien, wobei neue druckstabile Materialien zum Einsatz kommen, die bis fünfhundert Grad Celsius temperaturstabil sind.

Aufgabe der Erfindung ist es, das Herstellen einer Reibschicht, insbesondere für einen trocken oder feucht laufenden Kupplungsreibbelag, auf einem Trägerelement zu vereinfachen.

Die Aufgabe wird durch ein Verfahren zum Herstellen einer Reibschicht mit den Merkmalen des Anspruchs 1 gelöst. Trockenlaufend bedeutet, dass der Kupplungsreibbelag im Betrieb nicht mit einem Kühl- und/oder Schmiermedium, wie Öl, in Kontakt kommt. Im Gegensatz dazu wird bei nasslaufenden Anwendungen dem Kupplungsreibbelag gezielt ein Kühl- und/oder Schmiermedium, wie Öl, zugeführt. Das Öl wird bei nasslaufenden Anwendungen zum Beispiel mit Hilfe geeigneter Fördereinrichtungen, wie Pumpen, aktiv zu dem Kupplungsreibbelag gefördert beziehungsweise umgepumpt. Bei feuchtlaufenden Kupplungsreibbelägen kommt der Kupplungsreibbelag mit einem Kühl- und/oder Schmiermedium, wie Öl, in Kontakt. Allerdings wird das Öl nicht aktiv zu dem Kupplungsreibbelag gefördert. Bei feuchtlaufenden Anwendungen planscht der Kupplungsbelag zum Beispiel ein einem Getriebeölsumpf. Bei den feuchtlaufenden Anwendungen, wie sie zum Beispiel bei Motorrädern vorkommen, kommt es zu einer Mischreibung im Betrieb des Kuppungsreibbelags. Der Begriff tribologisch wirksam wird im Folgenden noch erläutert. Der Pulverlack wird zum Beispiel durch ein Tauchbadverfahren aufgebracht. Dabei wird das Trägerelement in ein Pulverlackbad eingetaucht, um eine geeignete Pulverlackschicht auf das Trägerelement aufzubringen. Die Pulverlackschicht wird dann anschließend zu der tribologisch wirksamen Reibschicht ausgehärtet. Der Pulverlack kann aber auch anders auf das Trägerelement aufgebracht werden, zum Beispiel durch Sprühen. Gemäß dem erfindungsgemäßen Verfahren ist darüber hinaus vorgesehen, dass das Trägerelement vor dem Aufbringen eines Pulverlacks so stark erhitzt wird, dass der auf das erhitzte Trägerelement aufgebrachte Pulverlack eine ausreichend dicke Pulverlackschicht bildet, die auf dem Trägerelement zu einer tribologisch wirksamen Reibschicht aushärtet. Beim Aufbringen des Pulverlacks wird das Trägerelement zum Beispiel durch eine Wolke aus Pulverlackpartikeln bewegt, die homogen auf einer mit der Reibschicht zu versehenden Oberfläche des Trägerelements abgeschieden werden. Auf dem erhitzten Trägerelement werden in den Pulverlackpartikeln enthaltene Harze aufgeschmolzen und gelieren zu einer Pulverlackschicht auf dem Trägerelement. Beim Aushärten entsteht aus der Pulverlackschicht eine tribologisch wirksame Reibschicht. Tribologisch wirksam bedeutet in diesem Zusammenhang unter anderem, dass die ausgehärtete Pulverlackschicht einen ausreichend hohen Reibungskoeffizienten aufweist, um als Reibbelag, vorzugsweise im Automobilbereich, verwendet werden zu können. Bei dem Trägerelement handelt es sich vorzugsweise um ein Blechteil, das geerdet wird, um ein elektrostatisches Haften der vorher aufgeladenen Pulverlackpartikel an dem Trägerelement zu ermöglichen. Das Trägerelement kann auch als Druckgussteil ausgeführt sein. Trägerelemente können zum Beispiel als Aluminiumdruckgussteile kostengünstig hergestellt werden. Das Trägerelement weist vorteilhaft einen Mitnehmerbereich auf, der zur Darstellung einer drehfesten Verbindung dient. In dem Mitnehmerbereich ist das Trägerelement zum Beispiel mit einer Innenverzahnung versehen. In dem Mitnehmerbereich ist das Trägerelement vorteilhaft nicht mit einer Reibschicht versehen. Wenn der Mitnehmerbereich eine Verzahnung umfasst, kommt es zum Beispiel darauf an, dass Kanten der Verzahnung frei von der Reibschicht sind, um die Darstellung einer formschlüssigen Verbindung zu ermöglichen. Ansonsten dürfen Flächen in dem Mitnehmerbereich prinzipiell auch mit der Reibschicht versehen sein. Der Pulverlack umfasst zum Beispiel Bindemittel und Vernetzer. Bindemittel bilden die eigentliche Struktur der Pulverlackschicht beziehungsweise Reibschicht. Als Bindemittel werden zum Beispiel Harze verwendet. Vernetzer führen zu einer Reaktion, insbesondere zu einem Vernetzen, der Bindemittel. Die Bindemittel sind für den Aufbau eines polymeren Netzwerks verantwortlich und werden auch als Härter bezeichnet.

Gemäß dem erfindungsgemäßen Verfahren ist darüber hinaus vorgesehen, dass das Trägerelement vor dem Abscheiden des Pulverlacks auf einhundertfünfzig bis zweihundertfünfzig Grad Celsius erhitzt wird. Mit diesem Temperaturbereich wurden bei im Rahmen der vorliegenden Erfindung durchgeführten Untersuchungen und Versuchen zum Herstellen einer Reibschicht aus Pulverlack, insbesondere für einen trocken oder feucht laufenden Kupplungsreibbelag, auf dem Trägerelement sehr gute Ergebnisse erzielt.

Gemäß dem erfindungsgemäßen Verfahrens ist weiterhin vorgesehen, dass dem Pulverlack Stellmittel beigemischt werden, durch welche dessen Fließfähigkeit so weit herabgesetzt wird, dass sich an dem vorzugsweise senkrecht oder aufrecht gelagerten Trägerelement beim Beschichten und/oder Aushärten keine Tropfen oder Nasen in oder an der Pulverlackschicht bilden. Die Begriffe senkrecht oder aufrecht beziehen sich vorteilhaft auf eine Stellfläche oder Bodenfläche, auf der das Trägerelement beim Abscheiden des Pulverlacks aufgestellt wird. Durch die Beimischung von Stellmitteln in dem Pulverlack wird die Fließfähigkeit stark vermindert. Dadurch kommt es weder beim Aufbau der Pulverlackschicht noch beim Aushärten zu einem unerwünschten Abrutschen der Schicht in Form von Nasen oder Tropfen. Ais Stellmittel können alle feinen, bei den jeweiligen Betriebstemperaturen nicht schmelzbaren Verbindungen verwendet werden. Geeignete Stellmittel sind zum Beispiel alle Arten von Mineralien, zum Beispiel Schwerspat, Ruße und Gläser, zum Beispiel pyogene Kieselsäure.

Ein bevorzugtes Ausführungsbeispiel des Verfahrens ist dadurch gekennzeichnet, dass das Trägerelement in einem Durchlaufofen erhitzt wird, bevor es in eine Beschichtungskabine eingefahren wird, in welcher der Pulverlack auf das Trägerelement abgeschieden wird. In der Beschichtungskabine erzeugen geladene Pulverlackpartikel in dem geerdeten Trägerelement, das vorzugsweise als Trägerblech ausgeführt ist, Spiegelladungen. Das führt aufgrund von elektrostatischer Haftung dazu, dass die Pulverlackpartikel an einer Metalloberfläche des Trägerelements haften. Über das vorgeheizte Trägerelement werden die an dem Trägerelement haftenden Lackpartikel erhitzt.

Ein weiteres bevorzugtes Ausführungsbeispiel des Verfahrens ist dadurch gekennzeichnet, dass der Pulverlack Partikel mit Harz enthält, die über das erhitzte Trägerelement auf Temperaturen gebracht werden, die oberhalb einer ersten Glastemperatur des Harzes liegen. Wenn das in den Pulverlackpartikeln enthaltene Harz auf Temperaturen oberhalb der ersten Glastemperatur, die auch als Glasübergangstemperatur bezeichnet wird, erhitzt wird, werden die Pulverlackpartikel gelartig und kleben an dem Trägerelement. Außerdem steigt die elektrische Leitfähigkeit der gelartigen oder gelierten Pulverlackschicht und die Ladung der Pulverlackschicht kann über das geerdete Trägerelement abfließen. Deswegen kommt es vorteilhaft nicht zum Aufbau eines unerwünschten großen elektrischen Feldes, das das Schichtwachstum ungewollt begrenzen würde.

Ein nicht-erfindungsgemäßes Ausführungsbeispiel des Verfahrens ist dadurch gekennzeichnet, dass eine elektrische Leitfähigkeit der Pulverlackschicht auf dem erhitzten Trägerelement so weit erhöht wird, dass eine elektrische Ladung der Pulverlackschicht über das geerdete Trägerelement abfließt. Da die Schicht nicht in eine Sättigungsphase übergeht, kann der Schichtaufbau der Pulverlackschicht fortgesetzt werden. Die Schichtdicke der Pulverlackschicht kann somit vorteilhaft deutlich über das übliche Maß von herkömmlichen Pulverlackbeschichtungen gesteigert werden. Unerwünschte Ionisationseffekte, die den Einbau von neuen Pulverlackpartikeln bei herkömmlichen Verfahren begrenzen, werden vorteilhaft vermieden.

Ein weiteres nicht-erfindungsgemäßes Ausführungsbeispiel des Verfahrens ist dadurch gekennzeichnet, dass das Abscheiden des Pulverlacks auf das erhitzte Trägerelement fortgesetzt wird, bis eine gewünschte Reibschichtdicke erreicht ist. Auf dem vorgeheizten Trägerelement können mit den abgeschiedenen Pulverlackpartikeln auf einfache Art und Weise größere Schichtdicken erzielt werden, wie sie zur Darstellung der ausgehärteten Reibschicht benötigt werden.

Ein weiteres nicht-erfindungsgemäßes Ausführungsbeispiel des Verfahrens ist dadurch gekennzeichnet, dass die ausgehärtete Reibschicht eine Dicke von 0,2 bis 1,5 Millimeter, insbesondere von 0,5 bis 1,0 Millimeter, aufweist. Diese Reibschichtdicke hat sich im Hinblick auf trocken oder feucht laufende Anwendungen im Automobilbereich als besonders vorteilhaft erwiesen. Das Trägerelement ist vorteilhaft nicht nur auf einer Seite, sondern auf zwei voneinander abgewandten Seiten mit einer ausgehärteten Reibschicht aus darauf abgeschiedenen Pulverlackpartikeln versehen. Ein weiteres nicht-erfindungsgemäßes Ausführungsbeispiel des Verfahrens ist dadurch gekennzeichnet, dass der Pulverlack in einem einstufigen Prozess auf das erhitzte Trägerelement aufgetragen wird. Das liefert den Vorteil, dass die Trägerelemente möglichst schnell und mit möglichst wenig Prozessschritten mit mindestens einer Reibschicht, vorzugsweise mit mehr als einer Reibschicht, aus abgeschiedenen Pulverlackpartikeln versehen werden können.

Ein weiteres nicht-erfindungsgemäßes Ausführungsbeispiel des Verfahrens ist dadurch gekennzeichnet, dass das Trägerelement vor dem Erhitzen vorbehandelt wird, und/oder dadurch, dass die ausgehärtete Reibschicht nachbehandelt wird. Bei einer optionalen Vorbehandlung wird das Trägerelement zum Beispiel einer Reinigung unterzogen. Bei einer ebenfalls optionalen Nachbehandlung wird die ausgehärtete Reibschicht mindestens einer Nachbehandlung unterzogen, zum Beispiel durch Schleifen.

Die Erfindung betrifft gegebenenfalls auch ein Trägerelement, insbesondere für einen trocken oder feucht laufenden Kupplungsreibbelag, mit einer Reibschicht, die gemäß einem vorab beschriebenen Verfahren aus einer ausgehärteten Pulverlackschicht gebildet ist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine perspektivische Darstellung eines Trägerelements mit einer Reibschicht, die aus einem Pulverlack gebildet ist, auf einer Seite;
Figur 2 das gleiche Trägerelement wie in Figur 1 mit Reibschichten, die aus Pulverlack gebildet sind, auf zwei voneinander abgewandten Seiten;
Figur 3 eine perspektivische Darstellung eines Trägerelements in Gestalt eines Hohlzylinders mit einer Reibschicht aus einem Pulverlack und
Figur 4 eine vereinfachte Darstellung eines Ablaufplans eines Verfahrens zur Herstellung von Trägerelementen mit mindestens einer Reibschicht aus einem Pulverlack.

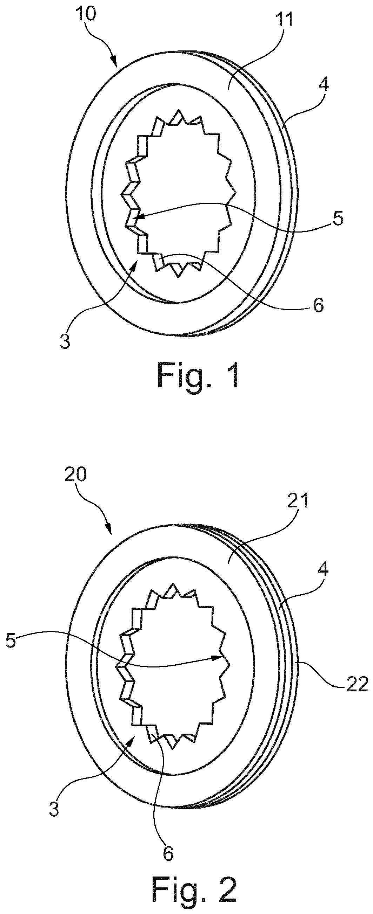

In den Figuren 1 und 2 ist ein Trägerelement 3 einer trocken laufenden Reiblamelle 10; 20 gemäß zwei verschiedenen Ausführungsbeispielen dargestellt. Das Trägerelement 3 ist als Blechteil in Gestalt einer Kreisringscheibe 4 ausgeführt.

Die Kreisringscheibe 4 weist radial innen einen Mitnehmerbereich 5 auf, der zur Darstellung einer drehfesten Verbindung mit einem (nicht dargestellten) Lamellenträger einer trocken laufenden Lamellenkupplung dient. Der Mitnehmerbereich 5 ist als Innenverzahnung 6 ausgeführt. Anders als dargestellt, kann der Mitnehmerbereich auch radial außen in Gestalt einer Außenverzahnung angeordnet sein.

Die in Figur 1 dargestellte Reiblamelle 10 ist auf einer Seite mit einer Reibschicht 11 versehen, die aus einem Pulverlack gebildet ist. Die Reibschicht 11 aus dem Pulverlack hat die Gestalt einer Kreisringscheibe, deren Außendurchmesser gleich dem Außendurchmesser der Kreisringscheibe 4 des Trägerelements 3 ist. Ein Innendurchmesser der Reibschicht 11 ist größer als ein Durchmesser der Innenverzahnung 6 im Mitnehmerbereich 5 des Trägerelements 3.

Bei der in Figur 2 dargestellten Reiblamelle 20 sind auf zwei voneinander abgewandten Seiten des Trägerelements 3 Reibschichten 21, 22 aus einem Pulverlack aufgebracht. Die Reibschichten 21, 22 haben den gleichen Innendurchmesser und den gleichen Außendurchmesser sowie die gleiche Dicke wie die Reibschicht 11 der in Figur 1 dargestellten Reiblamelle 10.

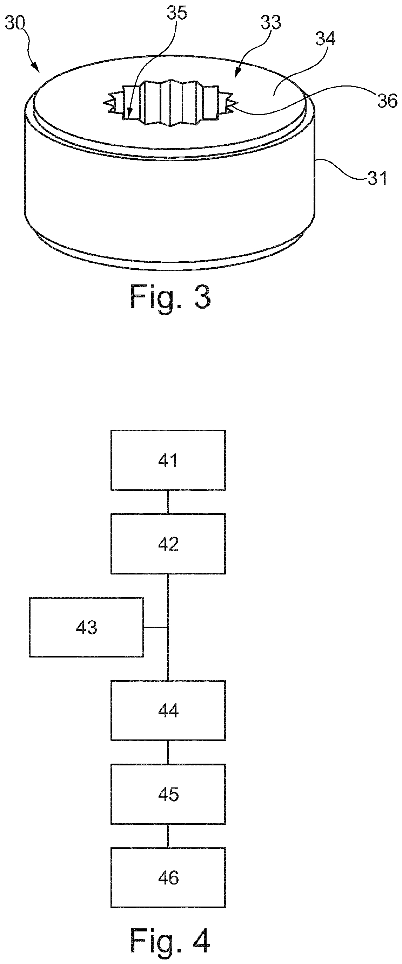

In Figur 3 ist eine Reiblamelle 30 perspektivisch dargestellt. Die Reiblamelle 30 ist mit einer Reibschicht 31 aus einem Pulverlack versehen. Die Reibschicht 31 ist auf einem Trägerelement 33 angeordnet, das die Gestalt eines geraden Hohlzylinders 34 aufweist.

Der Hohlzylinder 34 weist radial innen einen Mitnehmerbereich 35 mit einer Innenverzahnung 36 auf. Radial außen weist der Hohlzylinder 34 eine Mantelfläche auf, auf welche die Reibschicht 31 aus dem Pulverlack aufgebracht ist.

Die in den Figuren 1 bis 3 dargestellten Reiblamellen 10; 20; 30 sind mit relativ dünnen Reibschichten 11; 21, 22; 31 aus Pulverlack versehen. Bei der in Figur 2 dargestellten Reiblamelle 20 werden auf beiden Seiten des Trägerelements 3 Reibschichten 21, 22 aus Pulverlack aufgebracht. Bei den in den Figuren 1 und 2 dargestellten Reiblamellen10; 20 steht das Trägerelement 3 an seinem Innendurchmesser über die Reibschicht 11; 21, 22 hinaus.

Durch die Bildung der Reibschichten 11; 21, 22; 31 aus Pulverlack können die Reiblamellen 10; 20; 30 in sehr wenigen Prozessschritten industriell hergestellt werden. Darüber hinaus können die Reiblamellen 10; 20; 30 nahezu ohne Verlust von dem als Reibmaterial verwendeten Pulverlack hergestellt werden. Schließlich können durch die Bildung der Reibschichten 11; 21; 22; 31 aus Pulverlack die Taktzeiten bei der Herstellung gering gehalten werden.

Der Pulverlack, der zur Herstellung der Reibschichten 11; 21, 22; 31 verwendet wird, umfasst vorzugsweise Bindemittel, Vernetzer, Additive und Füllstoffe. Bindemittel bilden die eigentliche Struktur der Reibschicht 11; 21, 22; 31. Mögliche Substanzklassen für das beziehungsweise die Bindemittel sind: Epoxidharze, Polyesterharze (gesättigt und ungesättigt) Acrylatharze, Polyurethane, Polyamide, Polyethylen, Polyvinylchlorid.

Vernetzer führen zur Vernetzungsreaktion der Bindemittel und sind so für den Aufbau eines polymeren Netzwerkes in der Reibschicht 11; 21, 22; 31 verantwortlich. Als Vernetzer werden zum Beispiel die folgenden Substanzen verwendet: Phenolische Härter, Imidazolin-Derivate, Imidazole, Anhydridaddukte, Polycarbonsäureanhydride, Carbonsäureanhydride, Dicyandiamid-Derivate, Epoxidharz, Triglycidisocyanurat (TGIC), Hydroxyalkylamidhärter, aromatische Glycidylester, Isocyanataddukte, Uretdione, Dodecandicarbonsäure, Dicarbonsäuren, Isocyanataddukte, Diisocyandiamid, BF₃-Komplexe, saure Polyester, saure Acrylate, Polyphenole, Oxazoline, modifizierte Melamin- und Harnstoffharze.

Additive beeinflussen Eigenschaften des Lacks in der flüssigen und ausgehärteten Form. Mögliche Substanzklassen sind: Verlaufsmittel (zum Beispiel Acrylate), Entgasungsadditive (zum Beispiel Benzoin), Strukturmittel.

Füllstoffe dienen der Herstellung einer wirtschaftlichen Mischung und der Einstellung der tribologischen Eigenschaften. Mögliche Füllstoffe entstammen den folgenden Klassen: Metalloxide und Metallsalze (zum Beispiel Caliumcarbonate, Bariumsulfat, Talkum...), Ruße, Glas.

Die Reiblamellen 10, 20; 30 mit den Reibschichten 11; 21, 22; 31 aus Pulverlack sind besonders vorteilhaft zur Übertragung von Kräften geeignet, wie sie in Kupplungen und Bremsen im Automobilbereich üblich sind. Die Reiblamellen 10; 20; 30 können vorteilhaft in hybridisierten, automatisierten Doppelkupplungsgetrieben, Hybridkupplungen, trockenen oder feuchten Lamellenkupplungen, insbesondere in Allraddifferentialen, Überlastkupplungen, insbesondere in Zweimassenschwungrädern, und/oder Haltebremsen eingesetzt werden.

In Figur 4 ist mit Hilfe von Rechtecken 41 bis 46 ein Ablaufplan für ein Verfahren zur Herstellung von Pulverlackschichten zur Verwendung als Reibschicht (11; 21, 22; 31 in den Figuren 1 bis 3) dargestellt. Das Rechteck 41 betrifft eine optionale Vorbehandlung der Trägerelemente (3; 33 in den Figuren 1 bis 3), die als Trägerbleche ausgeführt sind und verkürzt auch als Bleche bezeichnet werden. Beim Vorbehandeln werden die Bleche zum Beispiel gereinigt.

Im Verfahrensschritt 42 werden die Bleche vorgeheizt. Beim Vorheizen wird das Trägerelement oder Blech, auf dem der Pulverlack dann später abgeschieden wird, in einem Durchlaufofen auf einhundertfünfzig bis zweihundertfünfzig Grad Celsius erwärmt, bevor es in eine Beschichtungskabine einfährt. Beim Vorheizen wird das Blech vorteilhaft soweit erhitzt, dass das Lackpulver später beim Abscheiden der Lackpartikel zu einer dicken Schicht geliert.

Der Verfahrensschritt 43 betrifft die Herstellung des Pulverlacks. Der Pulverlack besteht, wie vorab beschrieben ist, aus den Bestandteilen Bindemittel, Vernetzer, Additiven und Füllstoffen. Darüber hinaus wird durch die Beimischung von Stellmitteln in den Pulverlack dessen Fließfähigkeit stark vermindert. Dadurch kommt es weder beim Aufbau der Schicht noch beim Härten zu einem Abrutschen der Schicht in Form von Nasen oder Tropfen. Als Stellmittel können alle feinen, bei den Betriebstemperaturen beziehungsweise Herstelltemperaturen nicht schmelzbaren Verbindungen verwendet werden.

Der Verfahrensschritt 44 betrifft das Aufbringen der Pulverlackschicht auf das Trägerelement oder Blech. Beim eigentlichen Lackiervorgang fährt das zu beschichtende Blech oder Trägerelement durch eine Wolke aus Lackpartikeln in einer Beschichtungskabine.

In der Beschichtungskabine werden die entsprechend geladenen Pulverpartikel homogen auf mindestens eine Oberfläche des Blechs oder Trägerelements abgeschieden. Dabei erzeugen die geladenen Pulverlackpartikel in dem geerdeten Trägerelement oder Trägerblech Spiegelladungen und haften elektrostatisch an der Metalloberfläche.

Dadurch, dass das Blech oder Trägerelement durch eine homogene Wolke aus Pulverlackpartikeln fährt, können vorteilhaft auch Bauformen realisiert werden, die mit konventionellen Methoden der Reibbelagherstellungen, wie zum Beispiel Heißpressen, nicht möglich sind. Mit dem beschriebenen Verfahren zur Herstellung der Reibschichten aus Pulverlack können vorteilhaft auch konische oder anderweitig dreidimensional geformte Trägerelemente beschichtet werden, wie sie zum Beispiel in Figur 3 dargestellt sind.

Die in den Lackpartikeln enthaltenen Harze werden auf Temperaturen oberhalb der ersten Glasübergangstemperatur erhitzt. Dadurch werden sie gelartig und kleben aneinander und am Untergrund. Außerdem steigt die Leitfähigkeit des aufgetragenen Materials, und die Ladung der aus dem aufgetragenen Material gebildeten Schicht kann über das geerdete Trägerblech abfließen.

Der Verfahrensschritt 45 betrifft das Härten oder Aushärten der beim Beschichten aufgebrachten Pulverlackschicht. Das Härten oder Aushärten dauert zum Beispiel fünf bis zwanzig Minuten. Die beiden Prozessschritte 44 und 45 können verkettet in einem kontinuierlichen Prozess gefahren werden. Die Taktzeit beträgt zum Beispiel eins bis zehn Sekunden. Pulverlack, der nicht auf dem Trägerelement haften bleibt, kann angesaugt und erneut verwendet werden. Dadurch können vorteilhaft Lackausbeuten von über neunundneunzig Prozent erreicht werden.

Der Prozessschritt oder Verfahrensschritt 46 betrifft eine optionale Nachbehandlung des Trägerelements mit der Reibschicht. Bei der Nachbehandlung wird die Reibschicht zum Beispiel leicht angeschliffen, um eine besonders funktionstüchtige Reiboberfläche darzustellen. Beim Anschleifen wird die Reibschichtdicke vorzugsweise um weniger als 0,2 Millimeter reduziert.

### Bezugszeichenliste

- 3: Trägerelement
- 4: Kreisringscheibe
- 5: Mitnehmerbereich
- 6: Innenverzahnung
- 10: Reiblamelle
- 11: Reibschicht
- 20: Reiblamelle
- 21: Reibschicht
- 22: Reibschicht
- 30: Reiblamelle
- 31: Reibschicht
- 33: Trägerelement
- 34: Hohlzylinder
- 35: Mitnehmerbereich
- 36: Innenverzahnung
- 41: Rechteck
- 42: Rechteck
- 43: Rechteck
- 44: Rechteck
- 45: Rechteck
- 46: Rechteck

## Patentansprüche

1. Verfahren zur Herstellung einer Reibschicht (11;21;22;31), für einen trocken oder feucht laufenden Kupplungsbelag, auf einem Trägerelement (3;33), wobei ein Pulverlack aufgebracht wird, der auf dem Trägerelement (3;33) zu einer tribologisch wirksamen Reibschicht (11;21;22;31) aushärtet, wobei das Trägerelement (3;33) vor dem Aufbringen eines Pulverlacks so stark erhitzt wird, dass der auf das erhitzte Trägerelement (3;33) aufgebrachte Pulverlack eine ausreichend dicke Pulverlackschicht bildet, die auf dem Trägerelement (3;33) zu einer tribologisch wirksamen Reibschicht (11;21,22;31) aushärtet, wobei
das Trägerelement (3;33) vor dem Abscheiden des Pulverlacks auf 150 bis 250 Grad erhitzt wird,
**dadurch gekennzeichnet, dass** dem Pulverlack Stellmittel beigemischt werden, durch welche dessen Fließfähigkeit so weit herabgesetzt wird, dass sich an dem vorzugsweise senkrecht oder aufrecht gelagerten Trägerelement (3;33) beim Aushärten keine Tropfen oder Nasen in oder an der Pulverlackschicht bilden.

2. Verfahren nach Anspruch 1, **dadurch gekennzeichnet, dass** das Trägerelement (3;33) in einem Durchlaufofen erhitzt wird, bevor es in eine Beschichtungskabine eingefahren wird, in welcher der Pulverlack auf das Trägerelement (3;33) abgeschieden wird.

3. Verfahren nach einem der vorhergehenden Ansprüche, **dadurch gekennzeichnet, dass** der Pulverlack Partikel mit Harz enthält, die über das erhitzte Trägerelement (3;33) auf Temperaturen gebracht werden, die oberhalb einer ersten Glastemperatur des Harzes liegen.

## Claims

1. Method for manufacturing a friction coating (11; 21; 22; 31), for a dry- or wetrunning clutch lining, on a carrier element (3; 33), wherein there is applied a powder coating which cures on the carrier element (3; 33) to form a tribologically active friction coating (11; 21; 22; 31), wherein
before a powder coating is applied, the carrier element (3; 33) is heated to such an extent that the powder coating applied to the heated carrier element (3; 33) forms a sufficiently thick powder coating layer which cures on the carrier element (3; 33) to form a tribologically active friction coating (11; 21; 22; 31), wherein
the carrier element (3; 33) is heated to 150 to 250 degrees before the powder coating is deposited,
**characterised in that** there are added to the powder coating extenders by means of which the flowability of the powder coating is reduced to such an extent that, on the carrier element (3; 33) mounted preferably perpendicularly or upright, no drops or projections form in or on the powder coating layer on curing.

2. Method according to claim 1, **characterised in that** the carrier element (3; 33) is heated in a continuous oven before it is introduced into a coating booth in which the powder coating is deposited on the carrier element (3; 33).

3. Method according to any one of the preceding claims, **characterised in that** the powder coating comprises particles containing resin which are brought *via* the heated carrier element (3; 33) to temperatures which are above a first glass transition temperature of the resin.

## Revendications

1. Procédé de production d'une couche de friction (11; 21; 22 ; 31), pour une garniture d'embrayage sèche ou humide, sur un élément porteur (3 ; 33), dans lequel un revêtement en poudre est appliqué sur l'élément porteur (3 ; 33) pour former une couche de friction tribologiquement efficace (11 ; 21 ; 22 ; 31), dans lequel l'élément porteur (3 ; 33) est chauffé avant l'application d'un revêtement en poudre à tel point que le revêtement en poudre appliqué sur l'élément porteur chauffé (3 ; 33) forme une couche de revêtement en poudre suffisamment épaisse pour former sur l'élément support (3 ; 33) une couche de friction tribologiquement efficace (11 ; 21 ; 22 ; 31), dans lequel l'élément porteur (3 ; 33) est chauffé avant le dépôt du revêtement en poudre de 150 à 250 degrés,
**caractérisé en ce que** des agents d'ajustement sont ajoutés au matériau de revêtement en poudre, qui réduisent sa fluidité à un point tel que qu'aucune goutte ou nez de revêtement en poudre ne se forme dans ou sur ce revêtement pendant le durcissement sur l'élément porteur (3 ; 33), qui est de préférence disposé droit ou verticalement.

2. Procédé selon la revendication 1, **caractérisé en ce que** l'élément porteur (3 ; 33) est chauffé dans un four continu avant d'être transféré dans une cabine de revêtement dans laquelle le revêtement en poudre est déposé sur l'élément porteur (3 ; 33).

3. Procédé selon l'une des revendications précédentes, **caractérisé en ce que** le revêtement en poudre contient des particules de résine qui se déposent sur l'élément porteur chauffé (3 ; 33) à des températures supérieures à la première température de transition vitreuse de la résine.
